# FASCICULE DE BREVET EUROPEEN

(11) **EP 0 395 460 B1**
(45) Date de publication et mention de la délivrance du brevet: **12.05.1993**
(21) Numéro de dépôt: 90400852.1
(22) Date de dépôt: 29.03.1990
(51) Int. Cl.: F16D 55/227

(54) **Frein à disque à étrier coulissant**
Schwimmsattel-Scheibenbremse
Floating-caliper disc brake

(30) Priorité: 28.04.1989 FR 8905660
(43) Date de publication de la demande: 31.10.1990
(73) Titulaire: Bosch Systemes de Freinage, 93700 Drancy (FR)
(72) Inventeur: Le Deit, Gérard, BENDIX EUROPE Services Techniques, F-93700 Drancy (FR)
(74) Mandataire: Bentz, Jean-Paul

(56) Documents cités:
- FR-A- 2 329 901
- FR-A- 2 330 916
- FR-A- 2 373 720
- FR-A- 2 423 680

## Description

L'invention a pour objet un frein à disque à étrier coulissant notamment pour véhicule automobile.

L'invention concerne en particulier un frein à disque dont l'étrier est monté coulissant au moyen d'une colonnette axiale, sur un support fixe dans lequel sont reçus en ancrage et en coulissement deux éléments de friction susceptibles de venir en engagement de friction avec les faces opposées d'un disque tournant lors de la mise en oeuvre d'un moteur de frein agissant directement sur l'un des éléments de friction et agissant sur l'autre élément de friction par réaction au travers de l'étrier coulissant.

De façon connue, dans ce type de frein à disque, l'étrier est généralement maintenu en position sur le support fixe, lors de l'assemblage du frein, soit par l'intermédiaire d'une goupille passant dans des perçages ménagés dans des pattes solidaires du support fixe et dans une ouverture ménagée dans un prolongement de l'étrier, soit par l'intermédiaire d'une seconde colonnette axiale associée au support fixe par une liaison filetée, comme dans FR-A-2 329 901.

Mais ces différents types de verrouillage peuvent gêner pendant l'actionnement du moteur de frein, un coulissement longitudinal de l'étrier étant donné qu'il se produit une torsion dudit étrier ou provoquer un matage de l'organe de verrouillage ou des parties de l'étrier qui sont amenées au contact des parties du support fixe.

L'invention a pour objet un frein à disque du type décrit plus haut dans lequel un tel inconvénient est évité.

Dans ce but, l'invention propose un frein à disque à étrier monté coulissant sur un support fixe comportant deux éléments de friction reçus en ancrage et en coulissement dans ledit support fixe et susceptibles de venir en engagement de friction avec les faces opposées d'un disque tournant lors de l'actionnement d'un moteur de frein, une colonnette axiale solidaire du support fixe reçue en coulissement dans un alésage correspondant formé dans l'étrier et un moyen de verrouillage de l'étrier en rotation autour de la colonnette sur le support fixe, caractérisé en ce que le moyen de verrouillage de l'étrier sur le support fixe est du type à rotule constitué par une broche s'étendant axialement entre un alésage pratiqué dans le support fixe et un bras de l'étrier et comportant, à son extrémité pénétrant dans l'alésage du support fixe, une portée réduite afin de permettre un désalignement de l'étrier par rapport au support fixe lors de l'actionnement du moteur de frein.

Selon d'autres caractéristiques de l'invention:
- la portée réduite de la broche est cylindrique,
- la portée réduite de la broche est sphérique,
- la portée réduite de la broche est ovale
- la broche comporte, à son extrémité opposée à la portée réduite, un épaulement formant une surface de butée plane perpendiculaire à l'axe de ladite broche et destinée à venir s'appuyer sur une partie plane du bras de l'étrier, ladite surface de butée étant percée d'un trou fileté destiné à coopérer avec un organe de blocage traversant avec jeu une ouverture pratiquée dans l'étrier afin de permettre un centrage axial de ladite broche lors de l'assemblage du frein.

L'invention va être décrite plus en détail ci-dessous en se référant aux dessins annexés, donnés uniquement à titre d'exemple et sur lesquels :
- la Fig. 1 est une vue de dessus partiellement en coupe d'un frein à disque réalisé conformément à l'invention,
- la Fig. 2 est une vue partielle en coupe d'une variante de la portée réduite de la broche de verrouillage de l'étrier sur le support fixe,
- la Fig. 3 est une vue en coupe partielle selon la ligne 3-3 de la Fig. 2,
- la Fig. 4 est une vue partielle en coupe d'une variante de l'organe de blocage de la broche de verrouillage.

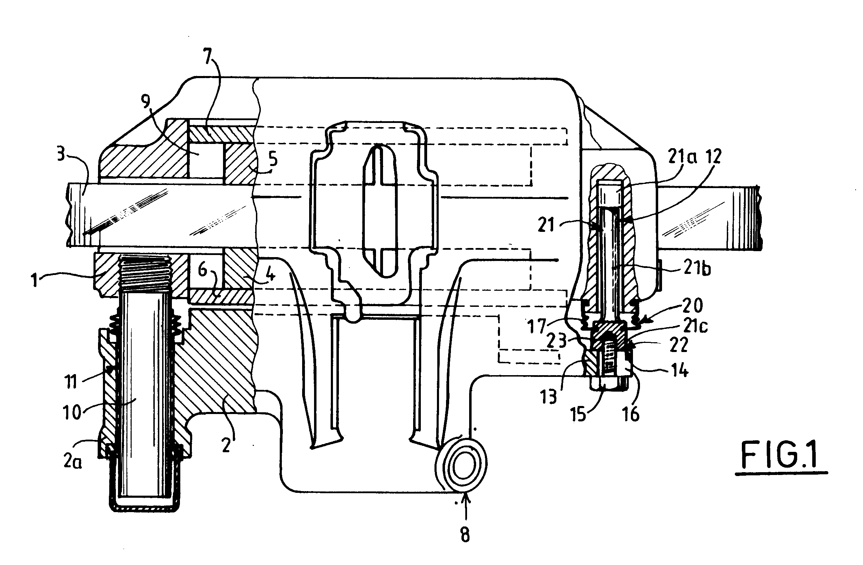

En se reportant tout d'abord à la Fig. 1 , on voit que le frein à disque représenté sur la figure comporte un support 1 prévu pour être associé à une partie fixe du véhicule non représenté. Le support fixe 1 reçoit en coulissement un étrier mobile 2 chevauchant un disque 3 prévu pour être associé en rotation à une roue du véhicule.

Le frein à disque comporte en outre deux organes de friction 4 et 5, munis respectivement, de plaques support 6 et 7, susceptibles de venir en engagement de friction avec le disque tournant 3, lors de l'actionnement d'un moteur hydraulique de frein 8. Les organes de friction 4 et 5 sont reçus en ancrage et en coulissement dans une ouverture 9 formée dans le support fixe 1.

L'étrier 2 coulisse sur le support fixe 1 au moyen d'une colonnette axiale 10 dont l'axe est sensiblement parallèle à l'axe du disque 3. La colonnette 10 est solidaire du support fixe 1 et est reçue en coulissement dans un alésage correspondant 11 formé dans un bras 2a de l'étrier 2.

Le frein à disque comprend également un moyen, désigné dans son ensemble par la référence 20, de verrouillage de l'étrier 2 sur le support fixe 1 qui s'oppose au basculement de l'étrier autour de l'axe de la colonnette 10.

Le moyen de verrouillage 20 est du type à rotule, et à cet effet, est constitué par une broche 21 dont l'axe au repos est sensiblement parallèle à l'axe du disque 3. Cette broche 21 s'étend axialement entre un alésage 12 pratiqué dans le support fixe 1 et un bras 13 de l'étrier 2 et comporte, à son extrémité pénétrant dans l'alésage 12, une portée réduite 21a supportée par une partie 21b de diamètre réduit sur toute la longueur logée dans l'alésage 12, de façon à ménager un jeu entre cette partie 21b et ledit alésage. La tige de la broche 21 est relativement souple et son diamètre en dehors de la portée 21a est inférieur à celle-ci pour permettre le désalignement.

La portée réduite 21a constitue donc dans l'alésage 12 une rotule et peut être soit cylindrique, soit sphérique.

La longueur de la portée réduite 21a est suffisamment courte pour permettre l'effet de rotule malgré le jeu très réduit entre l'alésage 12 et le diamètre de cette portée 21a, étant donné que ladite portée peut être cylindrique.

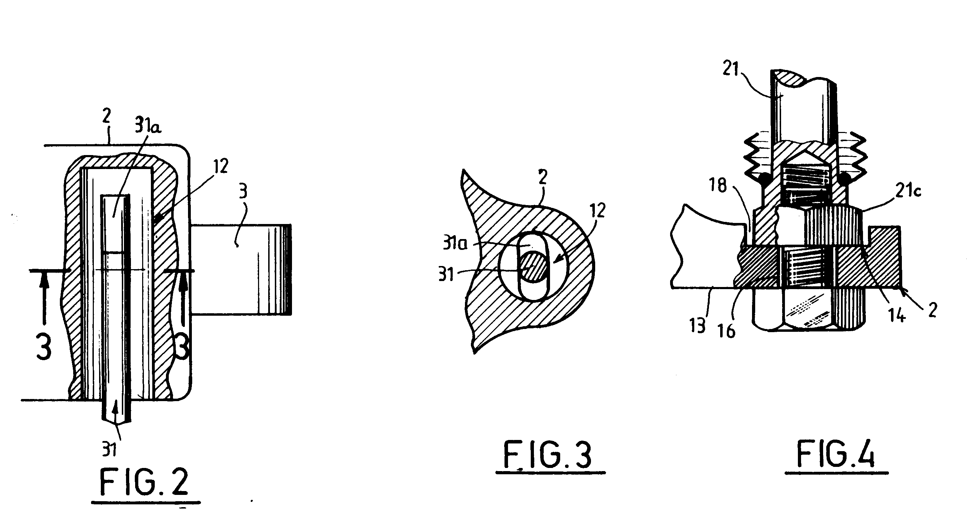

Selon une variante représentée aux figures 2 et 3, la broche 31 comporte, à son extrémité pénétrant dans l'alésage 12, une portée réduite ovale 31a. Cette disposition permet d'obtenir un contact ponctuel entre la portée 31a et l'alésage 12 et un verrouillage préférentiel dans le sens vertival tout en autorisant une certaine liberté dans le sens horizontal.

La broche 21 comporte, à son extrémité opposée à la portée réduite 21a, un épaulement 21c formant une surface de butée plane 22 perpendiculaire à l'axe de ladite broche et destinée à venir s'appuyer sur une partie plane 14 d'un bras 13 de l'étrier 2.

La surface de butée 22 est percée d'un trou fileté 23 destiné à coopérer avec un organe de blocage 15, constitué par exemple par une vis, traversant avec jeu une ouverture 16 pratiquée dans le bras 13 de l'étrier. Cette ouverture 16 a par exemple la forme d'une encoche.

Un soufflet d'étanchéité 17 s'étend entre l'epaulement 21c de la broche 21 et le support fixe 1.

L'opération de montage de l'étrier 2 sur le support fixe 1 s'effectue de la manière suivante.

La colonnette 10 est déjà vissée sur le support fixe 1 et l'étrier 2 est présenté en position basculée et monté sur ladite colonnette. La broche 21 est introduite dans l'alésage 12.

L'étrier 2 est alors basculé autour de l'axe de la colonnette 10 jusqu'à ce que le vissage de la vis 15 dans le trou fileté 23 de la broche 21, au travers de l'ouverture 16, soit possible.

Au cours du vissage de la vis 15, la surface de butée 22 de la broche 21 vient en appui contre la partie plane 14 du bras 13 de l'étrier 2 et le jeu ménagé entre le corps de ladite vis 15 et l'ouverture 16 permet un centrage de la broche 21 dans l'alésage 12.

Selon une variante représentée à la figure 4, l'épaulement 21c de la broche 21 peut être en forme de six pans, logé dans une rainure 18 réalisée sur la partie plane 14 du bras 13 de l'étrier 2, de façon à empêcher la rotation de la broche 21 lors du serrage par la vis 15. Dans ce cas, l'ouverture 16 a la forme d'une lumière.

De plus, la surface interne de l'alésage 12 n'est en contact avec la surface externe de la broche 21 que sur une faible portion limitée à la portée réduite 21a.

On comprend, que grâce cette disposition, l'étrier peut librement subir les torsions usuelles d'où résulte un désalignement par rapport au support fixe lors de l'actionnement du moteur de frein ce qui évite les effets de coincement et contribue à l'éfficacité du freinage.

## Revendications

1. Frein à disque à étrier (2) monté coulissant sur un support fixe (1) comportant deux éléments de friction (4, 5) reçus en ancrage et en coulissement dans ledit support fixe (1) et susceptibles de venir en engagement de friction avec les faces opposées d'un disque tournant (3) lors de l'actionnement d'un moteur de frein (8), une colonnette axiale (10) solidaire du support fixe (1) et reçue en coulissement dans un alésage (11) correspondant formé dans l'étrier (2), et un moyen de verrouillage (20) de l'étrier (2) en rotation autour de la colonnette (10) sur le support fixe (1), caractérisé en ce que le moyen de verrouillage de l'étrier (2) sur le support fixe (1) est du type à rotule constitué par une broche (21 - 31) s'étendant axialement entre un alésage (12) pratiqué dans le support fixe (1) et un bras (13) de l'étrier (2) et comportant, à son extrémité pénétrant dans l'alésage (12) du support fixe (1), une portée réduite (21a - 31a) afin de permettre un désalignement de l'étrier (2) par rapport au support fixe (1) lors de l'actionnement du moteur de frein (8).

2. Frein à disque selon la revendication 1 caractérisé en ce que la portée réduite (21a) de la broche (21) est cylindrique.

3. Frein à disque selon la revendication 1 caractérisé en ce que la portée réduite (21a) de la broche (21) est sphérique.

4. Frein à disque selon la revendication 1 caractérisé en ce que la portée réduite (31a) de la broche (31) est ovale.

5. Frein à disque selon la revendication 1 caractérisé en ce que la broche (21) comporte, à son extrémité opposée à la portée réduite (21a), un épaulement (21c) formant une surface de butée plane (22) perpendiculaire à l'axe de ladite broche (21) et destinée à venir s'appuyer sur une partie plane (14) du bras (13) de l'étrier (2), ladite surface de butée (22) étant percée d'un trou fileté (23) destiné à coopérer avec un organe de blocage (15) traversant avec un jeu une ouverture (16) pratiquée dans le bras (13) de l'étrier (2) afin de permettre un centrage axial de ladite broche (21) lors de l'assemblage du frein.

6. Frein à disque selon la revendication 5, caractérisé en ce que l'épaulement (21c) est en forme de six pans logé dans une rainure (18) réalisée sur la partie plane (14) du bras (13) de l'étrier (2).

7. Frein à disque selon l'une des revendications précédentes, caractérisé en ce qu'il comporte des moyens d'étanchéité (17) entourant l'extrémité de l'épaulement (21c) de la broche (21) et s'étendant entre ledit épaulement et le support fixe (1).

## Patentansprüche

1. Scheibenbremse mit einem Sattel (2), der verschiebbar auf einem festen Träger (1) befestigt ist, mit zwei Reibungselementen (4, 5), die verankert und verschiebbar im festen Träger (1) aufgenommen und geeignet sind, in Reibungseingriff mit den gegenüberliegenden Flächen einer sich drehenden Scheibe (3) beim Betätigen eines Bremsmotors (8) zu treten, einem axialen Bolzen (10), der mit dem festen Träger (1) fest verbunden und verschiebbar in einer entsprechenden Bohrung (11) aufgenommen ist, die im Sattel (2) ausgebildet ist, und einem Mittel zum Verriegeln (20) des Sattels (2) gegen Verdrehen um den Bolzen (10) auf dem festen Träger (1), **dadurch gekennzeichnet,** daß das Verriegelungsmittel des Sattels (2) auf dem festen Träger (1) vom Kugelgelenktyp ist, das einen Dorn (21, 31) aufweist, der sich axial zwischen einer im festen Träger (1) eingearbeiteten Bohrung (12) und einem Ansatz (13) des Sattels (2) erstreckt und an seinem Ende, das in die Bohrung (12) des festen Trägers (1) eindringt, einen reduzierten Bereich (21a, 31a) aufweist, damit eine Fehlausrichtung des Sattels (2) bezüglich des festen Trägers (1) während der Betätigung des Bremsmotors (8) möglich ist.

2. Scheibenbremse nach Anspruch 1, dadurch gekennzeichnet, daß der reduzierte Bereich (21a) des Dorns (21) zylindrisch ist.

3. Scheibenbremse nach Anspruch 1, dadurch gekennzeichnet, daß der reduzierte Bereich (21a) des Dorns (21) sphärisch ist.

4. Scheibenbremse nach Anspruch 1, dadurch gekennzeichnet, daß der reduzierte Bereich (31a) des Dorns (31) oval ist.

5. Scheibenbremse nach Anspruch 1, dadurch gekennzeichnet, daß der Dorn (21) an seinem dem reduzierten Bereich (21a) gegenüberliegenden Ende eine Schulter (21c) enthält, die eine ebene Anschlagfläche (22) bildet, die senkrecht zum Dorn (21) verläuft und dafür vorgesehen ist, sich auf einem ebenen Teil (14) des Ansatzes (13) des Sattels (2) abzustützen, wobei die Anschlagfläche (22) mit einer Gewindebohrung (23) versehen ist, die dafür ausgelegt ist, mit einem Verriegelungsteil (15) zusammenzuwirken, das mit einem Spiel eine Öffnung (16) durchquert, die in den Ansatz (13) des Sattels (2) eingearbeitet ist, damit eine axiale Zentrierung des Dorns (21) beim Zusammenbau der Bremse möglich ist.

6. Scheibenbremse nach Anspruch 5, dadurch gekennzeichnet, daß die Schulter (21c) in Sechskantform ausgebildet ist, die in einer Einkerbung (18) untergebracht ist, die auf dem ebenen Teil (14) des Ansatzes (13) des Sattels (2) ausgebildet ist.

7. Scheibenbremse nach einem der vorhergehenden Ansprüche, dadurch gekennzeichnet, daß sie Dichtungsmittel (17) enthält, die das Ende der Schulter (21c) des Dorns (21) umgeben und sich zwischen der Schulter und dem festen Träger (1) erstrecken.

## Claims

1. Disc-brake with a caliper (2) slidably mounted on a stationary support (1), comprising two friction pads (4, 5) anchorably and slidably received in the said stationary support (1) and capable of frictionally engaging with the opposite faces of a revolving disc (3) upon actuation of a brake motor (8), an axial column (10) integral with the stationary support (1) and slidably received in a corresponding bore (11) formed in the caliper (2), and a means (20) for locking the caliper (2) in rotation about the column (10) on the stationary support (1), characterized in that the means for locking the caliper (2) on the stationary support (1) is of the ball joint type, consisting of a pin (21 - 31) extending axially between a bore (12) provided in the stationary support (1) and an arm (13) of the caliper (2) and comprising, at its end penetrating the bore (12) of the stationary support (1), a small bearing surface (21a -31a), so as to permit a disalignment of the caliper (2) with respect to the stationary support (1) upon actuation of the brake motor (8).

2. Disc-brake according to Claim 1, characterized in that the small bearing surface (21a) of the pin (21) is cylindrical.

3. Disc-brake according to Claim 1, characterized in that the small bearing surface (21a) of the pin (21) is spherical.

4. Disc-brake according to Claim 1, characterized in that the small bearing surface (31a) of the pin (31) is oval.

5. Disc-brake according to Claim 1, characterized in that the pin (21) comprises, at its end opposite the small bearing surface (21a), a shoulder (21c) forming a plane stop surface (22) perpendicular to the axis of the said pin (21) and intended to come to bear on a plane part (14) of the arm (13) of the caliper (2), the said stop surface (22) containing a threaded hole (23) intended to cooperate with an immobilizing member (15) passing, with a clearance, through an opening (16) provided in the arm (13) of the caliper (2) so as to permit an axial centring of the said pin (21) during assembly of the brake.

6. Disc-brake according to Claim 5, characterized in that the shoulder (21c) is in the form of six sides accommodated in a groove (18) formed on the plane part (14) of the arm (13) of the caliper (2).

7. Disc-brake according to one of the preceding claims, characterized in that it comprises sealing means (17) surrounding the end of the shoulder (21c) of the pin (21) and extending between the said shoulder and the stationary support (1).
